(19)

Europäisches Patentamt
European Patent Office
Office européen des brevets

(11) **EP 4 664 345 A1**

(12) **EUROPEAN PATENT APPLICATION**

(43) Date of publication:
**17.12.2025 Bulletin 2025/51**

(21) Application number: **25176451.0**

(22) Date of filing: **14.05.2025**

(51) International Patent Classification (IPC):
**G06F 30/20** (2020.01)    **G06F 17/13** (2006.01)
**G06F 30/28** (2020.01)    G06F 111/10 (2020.01)

(52) Cooperative Patent Classification (CPC):
**G06F 30/20; G06F 17/10; G06F 17/13; G06F 30/28;**
G06F 2111/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.06.2024 PL 44880724**

(71) Applicant: **Uniwersytet Jagiellonski**
**31-007 Krakow (PL)**

(72) Inventors:
• **JUDA, Mateusz**
**31-975 Krakow (PL)**
• **MROZEK, Marian**
**30-389 Krakow (PL)**
• **KAPELA, Tomasz**
**30-798 Krakow (PL)**
• **LIPINSKI, Michal**
**38-400 Krosno (PL)**

(74) Representative: **Kancelaria Eupatent.pl Sp. z o.o.**
**ul. Jana Kilinskiego 193 lok. 2.13**
**93-106 Lodz (PL)**

(54) **A METHOD AND A SYSTEM FOR GENERATING COMBINATORIAL MULTIVECTOR FIELDS IN MEASUREMENTS OF TECHNICAL SYSTEMS**

(57)    A computer-implemented method for performing real-time measurements in a technical system, the method comprising: receiving input data representing sampled vector fields (SVF) obtained from real-time sensor measurements of said technical system, wherein said sampled vector fields comprise vectors associated with discrete measurement points within a physical space of said technical system; transforming the input data into a directed graph; generating candidate multivectors from said directed graph; determining an optimal decomposition of a finite topological space into multivectors selected from candidate multivectors; creating a transition graph by augmenting the directed graph with additional intra-multivector edges; and outputting data representing the transition graph as a computer-readable representation of the real-time dynamic behavior of the technical system, wherein said transition graph explicitly models transitions between system states derived directly from the sampled vector fields.

Fig. 4

**Description**

**TECHNICAL FIELD**

The present invention concerns a computer-implemented method and system for generating combinatorial multivector fields in measurements of technical systems. The combinatorial multivector fields are generated on finite topological spaces wherein each such space is represented by a directed graph, from input data comprising pointwise sampled vector fields (SVF) obtained from sensor measurements of said technical system. The invention addresses technical challenges in transforming raw physical measurements into a structured graph-based dynamic system model. The transformation process is a sequence of algorithmic and architectural steps designed to construct, optimize, and analyze topologically faithful discrete models for use in engineering and scientific applications.

**OVERALL BACKGROUND**

Modern computational tools for automatic creation of multivector fields for finite topological spaces with a preset cost function are an important element in data analysis, numerical simulation, and dynamic-system modeling. Sampled vector fields (SVFs) are crucial to numerous engineering and scientific applications in which precise analysis of dynamical and topological behaviour is required. Such data may originate from physical experiments, astronomical observations, fluid-mechanics studies, or computer simulations.

In the prior art, dynamic systems have been typically modeled by differential equations, finite-element methods, or interpolation techniques. These approaches present limitations, including simplified model assumptions, difficulty handling high-dimensional data, and issues of numerical accuracy and stability.

Processing sampled data requires discretising continuous mathematical models, a step that can cause loss of information and introduce further computational error. Conventional methods also entail intensive numerical computation, which can be time-consuming and costly for large data sets.

Dynamic system modeling must also respect the underlying topological structure of the state space. Advanced topological and combinatorial methods are therefore required, yet their direct application is hampered by computational complexity.

Existing methods are seldom adapted to data that are discrete or irregularly sampled. New techniques are needed that preserve both topological and dynamical structure, while effectively handling such data.

Accordingly, there is a demand for computational methods that process sampled vector fields more efficiently and accurately, exploit all information contained in the data, and avoid reliance on continuous models or expensive numerical solvers. Such methods should overcome the above-mentioned limitations and open further possibilities for analysing and modeling physical and biological phenomena in technical systems.

**BACKGROUND - MULTIVECTORS**

For a directed graph G and vertices s, t in G, the edge from s to t is denoted s→t, and a directed path from s to t is denoted

$$s \rightsquigarrow t.$$

A finite topological space is represented by a set of cells $\mathcal{K}$ endowed with a partial order relation, thus corresponding to an acyclic directed graph, denoted as G($\mathcal{K}$). A subset M $\subset$ $\mathcal{K}$ is called a multivector if, for any $\sigma$, $\tau$ in M and any $\rho$ in $\mathcal{K}$ satisfying

$$\sigma \rightsquigarrow \rho \rightsquigarrow \tau,$$

the cell $\rho$ also belongs to M (convexity condition). A decomposition $\mathcal{M}$ of the set $\mathcal{K}$ into multivectors is called a combinatorial multivector field. For such a decomposition, the transition graph is defined as:

$$G(\mathcal{M}) := G(K) \cup \bigcup_{M \in \mathcal{M}} \{\sigma \rightarrow \tau \mid \sigma, \tau \in M\}.$$

Intuitively, $G(\mathcal{M})$ augments the original graph G($\mathcal{K}$) by adding edges connecting cells that belong to the same multivector. While *M* is not unique for a given $\mathcal{K}$, the graph $G(\mathcal{M})$ is uniquely determined once *M* is specified.

From a practical viewpoint, decompositions *M* are particularly interesting when $G(\mathcal{M})$ approximates transitions within the phase space of the modeled dynamical system. To this end, suppose a compatibility function

$$F(\sigma \rightsquigarrow \tau): \mathbb{R}$$

is given for paths

$$\sigma \rightsquigarrow \tau$$

in $G(\mathcal{K})$. Using this function, the compatibility of a multivector M is defined as:

$$\mathcal{F}(M) := \sum_{\sigma, \tau \in M} \mathcal{F}(\sigma \rightsquigarrow \tau)$$

and the overall compatibility of the combinatorial multivector field $\mathcal{M}$ is:

$$.\mathcal{F}(\mathcal{M}) := \sum_{M \in \mathcal{M}} \mathcal{F}(M).$$

As an illustrative example, simplicial complexes are considered as possible $\mathcal{K}$, providing a finite combinatorial description of the phase space (a subset of $\mathbb{R}^n$). However, the presented framework is general enough to accommodate other types of spaces.

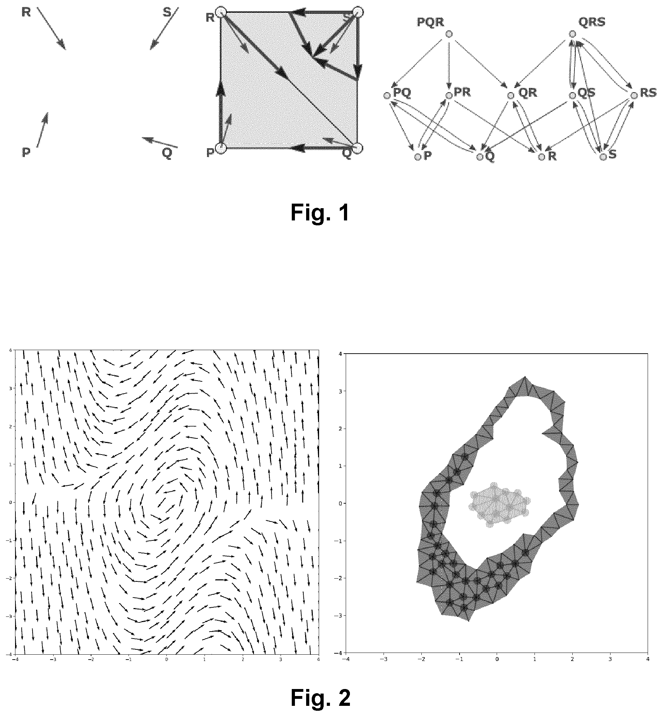

The method is demonstrated using an example (Fig. 1), where input vectors are anchored at points P, Q, R, S. One admissible finite topological space is the triangulation composed of simplices:
{{P},{Q},{R},{S},{PQ},{PR},{QR},{RS},{SQ},{PQR},{QRS}}.

The corresponding partially ordered set structure is shown on the right-hand side of Fig. 1.

Initially, the input vectors provide directional information relative to the simplicial space. The vector anchored at point R, slightly offset toward edge RQ, reasonably suggests a transition from cell R to cell RQ; similarly, vectors at points P and Q suggest analogous transitions. Thus, the decomposition *M* should include multivectors {P, PR}, {R, RQ}, and {Q, QP}.

A different situation occurs with the vector anchored at point S, which clearly points towards the center of triangle QRS. Thus, a desirable transition is from cell S directly to cell QRS, suggesting a multivector {S, QRS}. However, this alone violates the convexity condition. To preserve convexity, the multivector must include intermediate cells SR and SQ, resulting in the expanded multivector {S, QRS, SR, SQ}. This convexity condition is evident in Fig. 1, where the connection from S to QRS necessarily implies additional intermediate connections: from S to QS, from S to RS, from QS to QRS, and from RS to QRS.

Additionally, the triangle PQR, toward which no input vector significantly points, forms a singleton multivector {PQR}, analogous to a critical cell known from dynamical systems theory.

The complete graph structure is visualized clearly on the right side of Fig. 1. Downward arrows reflect the partial order structure of the topological space, while upward arrows represent connections within the same multivector. Of particular interest is the presence of a periodic orbit containing the cells {P, PR, R, RQ, Q, QP}. Dynamically, this orbit acts as an attractor, drawing states from the critical cell PQR.

In the provided example, assigning a vertex x and a cell σ to a multivector intuitively depends on the angle between the vector originating from x and the cell σ. This intuition naturally extends to any pair of cells

$$\sigma \rightsquigarrow \tau.$$

Specifically, for such pairs, one can consider the segment connecting the barycenters of σ and τ and evaluate the cosines of angles formed by the vectors anchored at vertices of $\tau$ with respect to this segment. Higher cosine values indicate greater compatibility. This geometric approach allows for a concrete definition of the compatibility function

$$F(\sigma \rightsquigarrow \tau)$$

for simplicial complexes. Nevertheless, the described methodology is general and can incorporate other compatibility functions suitable to different contexts. The provided geometric intuition serves as a practical starting point, amenable to verification and adaptation for specific applications.

## SUMMARY OF THE INVENTION

The present invention provides a combinatorial description of data sets represented by point clouds in $\mathbb{R}^n$ with vectors attached at these points, a type of information frequently encountered in measuring and analyzing complex physical phenomena. It avoids reliance on continuous modeling and interpolation by working directly with purely discrete representations (finite topological spaces), thus eliminating many numerical difficulties typically encountered in conventional workflows. Traditional methods for processing such information usually build continuous models using differential equations, either derived analytically from known physical laws or generated via interpolation methods based on collected data. However, when studying complex physical or biological phenomena, these continuous models serve merely as approximations founded on heuristic assumptions, with numerous parameters often unknown or difficult to measure accurately.

The invention addresses the objective technical problem of efficiently and robustly transforming real-time sensor measurements represented as sampled vector fields (SVF) into a highly accurate, stable, and computationally efficient discrete model of dynamic behavior. Conventional approaches typically suffer from inherent limitations such as numerical inaccuracies due to floating-point rounding errors, truncation errors, convergence issues, algorithm instability, and performance bottlenecks caused by reliance on iterative numerical solvers or complex interpolations.

In contrast, the invention processes discrete sensor data natively, thereby eliminating floating-point rounding errors, truncation errors, and problems related to algorithm stability and convergence typically introduced by intermediate numerical approximations. Because the method is fully combinatorial, it not only preserves all information encoded in the input but also leverages a comprehensive range of established discrete modeling techniques, from classical graph theory methods to modern machine learning tools. This dual capability enables both quantitative (statistical) and qualitative (structural) analyses, offering significant advantages in modeling physical systems, especially under irregular or noisy sampling conditions.

Formally, the invention constructs a dynamic system model represented by a directed graph whose vertices correspond to phase-space cells and whose paths approximate system trajectories. This allows analysis of input data to answer questions traditionally posed in the context of analytically described dynamical systems. Thus, it becomes possible to extract dynamic characteristics of observed physical phenomena directly from sampled vector fields without the intermediate step of creating analytical system models.

Integer-programming techniques, solvable using commercial software such as ILOG CPLEX, are employed to identify optimal combinatorial multivector fields. Although integer programming is theoretically NP-hard, practical instances typically yield accurate results consistent with analytical benchmarks within acceptable computational timeframes.The invention provides a computer-implemented method for generating combinatorial multivector fields for finite topological spaces represented by directed graphs, enabling effective processing of sampled vector fields related to real-world object measurements. In this method, input data representing sampled vector fields are transformed into a directed graph. A set of candidate multivectors is generated using the directed graph and a compatibility function. The method then determines an optimal decomposition into multivectors corresponding to the sampled vector field measurements, maximizing the compatibility function. Subsequently, a transition graph is created by adding connections between cells within each multivector. This approach significantly enhances modeling accuracy of dynamic and topological phenomena without relying on continuous mathematical models and complex numerical methods.

Generating combinatorial multivector fields involves solving an integer-programming problem whose objective function is based on the compatibility function, subject to linear constraints that enforce convexity and decomposition conditions. This method precisely determines the optimal decomposition of finite topological spaces into multivectors, translating into a more accurate representation of input data and improved modeling fidelity.

Advantageously, the compatibility function is approximated using candidates for multivectors and their representative elements, reducing computational complexity and increasing overall efficiency.

From a computational perspective, many existing real-time control methods rely on complex iterative solvers with unpredictable runtimes. In contrast, the integer-programming formulation described here exploits bounded-latency implementations, such as specialized branch-and-bound heuristics running on GPUs, systolic arrays in FPGAs, or other hardware accelerators, achieving worst-case execution time (WCET) guarantees critical for industrial applications.

Another significant advantage of the combinatorial framework is its modularity. It supports partial or incremental updates as new sensor data arrives, without requiring a complete recomputation of a continuous mesh. Consequently, the system can adapt in near-real-time to changing conditions while preserving topological integrity. This is particularly beneficial in scenarios involving noisy, bursty, or incomplete measurements, where classical methods might demand repetitive remeshing or rediscretization, thus increasing computational overhead and latency.

In summary, the invention uniquely integrates topological rigor, numerical stability, efficient combinatorial optimization, and incremental updating capability to overcome limitations of conventional continuous and discrete modeling methods. It thus provides a non-trivial technical solution directly addressing high-fidelity, noise-tolerant, and safety-critical industrial control requirements: capabilities that surpass standard discrete or continuous methodologies, offering new avenues for real-time analysis and action upon complex physical phenomena.

Additionally, the invention includes a dedicated computer system configured to execute the disclosed combinatorial method, comprising modules responsible for receiving input sensor data, transforming it into discrete directed graphs, generating combinatorial multivector fields, performing optimized decomposition, creating structured transition graphs, facilitating user interactions, presenting analytical results, securely storing data, and coordinating overall system operations. In a specific aspect, the present invention relates to a computer-implemented method for performing real-time measurements in a technical system, the method comprising: receiving input data representing sampled vector fields (SVF) obtained from real-time sensor measurements of said technical system, wherein said sampled vector fields comprise vectors associated with discrete measurement points within a physical space of said technical system;

transforming the input data into a directed graph G($\mathcal{K}$), wherein $\mathcal{K}$ is a finite topological space comprising discrete cells arranged according to a partial ordering that reflects adjacency and inclusion relationships among said cells, and wherein each cell corresponds to at least one of said measurement points; generating candidate multivectors (C) from said directed graph G($\mathcal{K}$) by evaluating a compatibility function

$$\mathcal{F}(\sigma \rightsquigarrow \tau),$$

wherein

$$\sigma \rightsquigarrow \tau$$

denotes a directed path between two cells $\sigma$ and $\tau$ in the directed graph G($\mathcal{K}$) and wherein said compatibility function quantifies directional compatibility between cells based on the vectors from the sampled vector fields (SVF); determining an optimal decomposition (M) of the finite topological space ($\mathcal{K}$) into multivectors selected from said candidate multivectors (C), wherein the optimal decomposition maximizes the compatibility function $\mathcal{F}(\mathcal{M})$ to best approximate dynamic transitions indicated by the sampled vector fields (SVF); creating a transition graph G(M) by augmenting the directed graph G($\mathcal{K}$) with additional intra-multivector edges, wherein said transition graph represents the dynamic behavior of the technical system derived directly from the sampled vector fields; and outputting data representing the transition graph (G($\mathcal{M}$)) as a computer-readable representation of the real-time dynamic behavior of the technical system, wherein said transition graph explicitly models transitions between system states derived directly from the sampled vector fields (SVF).

Preferably, the method further comprises using said outputted data representing the transition graph (G(M)) to determine adjustments to at least one operating parameter of the technical system based on the detected dynamic behavior, wherein said adjustments are configured to maintain, optimize, or correct system performance in real-time.

Preferably, the method further comprises analyzing said outputted data representing the transition graph (G(M)) to detect an abnormal transition indicative of deviation from a predefined baseline dynamic behavior of the technical system; and generating, in response to the detected abnormal transition, a protective control signal configured to initiate at least one safeguard action to protect or stabilize operation of the technical system.

Preferably, determining the optimal decomposition (M) into multivectors is performed by solving an integer-programming optimization problem having an objective function defined by said compatibility function ($\mathcal{F}(\mathcal{M})$) and linear constraints enforcing convexity and decomposition conditions.

Preferably, the compatibility function ($\mathcal{F}(\mathcal{M})$) is approximated by evaluating compatibility between candidate multivectors (C) and their representative cells.

Preferably, said sensor measurements are measurements of fluid flow sensors.

Preferably, said sensor measurements are measurements of magnetic field.

Preferably, said technical system is a physical system modeled as a dynamical system.

Preferably, said technical system is a physical system described by partial differential equations.

Preferably, the steps of receiving input data, generating candidate multivectors, determining the optimal decomposition, and creating the transition graph are executed repeatedly and incrementally as new real-time sensor measurements become available, thereby enabling continuous real-time updating of the transition graph *(G(M))*.

Preferably, incremental updating is performed without recomputing the entire directed graph (G(X)), but only selectively updates portions affected by newly received sensor measurements.

Preferably, incremental updating of the transition graph ($G(\mathcal{M})$) maintains consistent topological integrity at all times, thereby providing reliable real-time monitoring and analysis in the presence of irregular, incomplete, or noisy input data.

Preferably, the integer-programming optimization used in determining the optimal decomposition *(M)* employs bounded-latency computational techniques, thereby ensuring predictable computational performance suitable for real-time industrial control applications.

Preferably, said bounded-latency computational techniques comprise at least one of: specialized branch-and-bound heuristics executed on graphical processing units (GPUs); systolic array implementations on field-programmable gate arrays (FPGAs); application-specific integrated circuits (ASICs); or other hardware acceleration methods providing guaranteed worst-case execution times (WCET).

In another aspect, the invention relates to a computer system for performing real-time measurements in a technical system, the computer system comprising: an input module configured to receive input data representing sampled vector fields (SVF) obtained from real-time sensor measurements of said technical system, wherein said sampled vector fields comprise vectors associated with discrete measurement points within a physical space of said technical system; a directed graph processor configured to transform the input data into the directed graph G, wherein $\mathcal{K}$ is a finite topological space comprising discrete cells arranged according to a partial ordering that reflects adjacency and inclusion relationships among said cells, and wherein each cell corresponds to at least one of said measurement points; a multivector module configured to generate candidate multivectors from said directed graph G by evaluating a compatibility function

$$\mathcal{F}(\sigma \rightsquigarrow \tau),$$

wherein

$$\sigma \rightsquigarrow \tau$$

denotes a directed path between two cells $\sigma$ and $\tau$ in the directed graph G, and wherein said compatibility function quantifies directional compatibility between cells based on the vectors from the sampled vector fields (SVF); an optimisation processor configured to determine an optimal decomposition *(M)* of the finite topological space into multivectors selected from said candidate multivectors, wherein the optimal decomposition maximizes the compatibility function $\mathcal{F}(\mathcal{M})$ to best approximate dynamic transitions indicated by the sampled vector fields (SVF); a transition-graph representation module configured to create a transition graph $G(\mathcal{M})$ by augmenting the directed graph G with additional intra-multivector edges, wherein said transition graph represents the dynamic behavior of the technical system derived directly from the sampled vector fields (SVF); an output module configured to output data representing the transition graph (G as a computer-readable representation of the real-time dynamic behavior of the technical system, wherein said transition graph explicitly models transitions between system states derived directly from the sampled vector fields (SVF); a user interface configured for user interaction, including input and inspection of data and results; memory configured to store input, intermediate, and output data; and a controller configured to coordinate the data flow and computational processes of the input module, directed graph processor, multivector module, optimisation processor, transition-graph representation module, output module, user interface, and memory.

**BRIEF DESCRIPTION OF THE DRAWINGS**

The invention is illustrated in details in a drawing, wherein:

Fig. 1 shows example input data (left); a simplicial representation with blue arrows defined by multivectors (centre); and an order representation with downward transitions from edge relations and upward arrows defined by multivectors (right).

Fig. 2 depicts the SVF from a simulation of the Van der Pol oscillator (left) and the corresponding attractor with periodic orbit highlighted (right).

Fig. 3 presents the attractor in the Lorenz system.

Fig. 4 schematically illustrates a computer system suitable for implementing the method according to the invention.

## DETAILED DESCRIPTION OF THE INVENTION

Without detailing the exact form of

$$\mathcal{F}(\sigma \dashrightarrow \tau),$$

the invention can be regarded as an optimization task: finding a decomposition of $\mathcal{K}$ into multivectors $\mathcal{M}$ that maximizes $\mathcal{F}(\mathcal{M})$.

A significant outcome of the present invention is that this optimization task can be formulated explicitly as an integer programming problem. The objective function described above is used, and convexity and decomposition conditions are modeled as linear constraints. An important simplification involves limiting the search space for multivectors forming the decomposition of $\mathcal{K}$. Although mathematically a multivector can be any convex subset, in practice it is unnecessary to consider all possible convex subsets. This observation permits solving a simpler problem, where predefined candidate sets are considered, from which the best decomposition is selected.

Each candidate is a subset of cells of $\mathcal{K}$ from which elements forming a multivector are selected. Due to the convexity requirement, natural candidates for multivectors are lower sets (down sets) and upper sets (up sets) from order theory:

lower set (down set):

$$\downarrow\tau = \{\sigma \mid \sigma \dashrightarrow \tau \in \mathcal{K}\}$$

upper set (up set):

$$\uparrow\tau = \{\sigma \mid \tau \dashrightarrow \sigma \in \mathcal{K}\}$$

Although other types of candidates could be considered, the description confines itself to these two classes for simplicity. Thus, regardless of whether the candidate is C = $\downarrow\tau$ or C = $\uparrow\tau$, the element $\tau$ acts as its representative, denoted $C^0$. In the synthetic example provided earlier, the multivector {QRS, RS, QS, S} can be formed from the candidate C = $\downarrow$QRS with representative $C^0$ = QRS. *

Let $\mathcal{C} := \{\downarrow\tau \mid \tau \in \mathcal{K}\} \cup \{\uparrow\tau \mid \tau \in \mathcal{K}\}$ be an example predefined set of candidates. For each candidate C $\in \mathcal{C}$, a subset $|C| \subset C$ must be selected, such that the family $\{|C| \mid C \in \mathcal{C}\}$ constitutes a combinatorial multivector field *M*. To achieve this, for each candidate C $\in \mathcal{C}$ and each cell $\sigma \in \mathcal{K}$, a binary variable C$\sigma$ is introduced, with value 1 indicating that $\sigma$ is part of the multivector determined by candidate C, i.e., $\sigma \in |C|$.

The optimization problem is formulated to maximize $\mathcal{F}(\mathcal{M})$ under the following constraints:

1. (Splitting) Each cell $\sigma \in \mathcal{K}$ must be selected by exactly one candidate: $\sum_{C \in \mathcal{C}} C_{\sigma} = 1$.
2. (Representation) If a candidate selects a cell $\sigma$, it must also select its representative cell $C^0$: $C_{\sigma} <= C_{C}0$.

3. (Convexity) Every |C| must be convex in $\mathcal{K}$. Formally, for every cell $\sigma \in \mathcal{K}$ and each $\tau \in \mathcal{K}$ lying on the path between $\sigma$ and $C^0$: $C_{\sigma} <= C_{\tau}$.

The Representation constraint is essential, as it ensures the inclusion of the representative $C^0$ in each selected

multivector.

The resulting objective function can initially be expressed as a quadratic form:

$$F(\mathcal{M}) = \sum_{M \in \mathcal{M}} F(M) = \sum_{M \in \mathcal{M}} \sum_{\sigma,\tau \in M} F(\sigma \rightsquigarrow \tau) = \sum_{C \in \mathcal{C}} \sum_{\sigma,\tau \in C} C_\sigma C_\tau F(\sigma \rightsquigarrow \tau).$$

This clearly defines an integer programming problem with a quadratic objective function due to the product $C_\sigma C_\tau$. Although this formulation can be practically sufficient, further simplifications may significantly enhance computational efficiency.

A practical simplification involves modifying the objective function by considering compatibility only between each selected cell and the representative of its candidate. Utilizing the Representation constraint, an approximation can be formulated:

$$F(\mathcal{M}) \approx \sum_{C \in \mathcal{C}} \sum_{\sigma \in C} C_\sigma F(\sigma \rightsquigarrow C^0),$$

substantially simplifying the compatibility function and reducing computational complexity. This approximation maintains the essential ranking of decompositions while greatly easing numerical solutions to the optimization task.

## COMPUTER SYSTEM

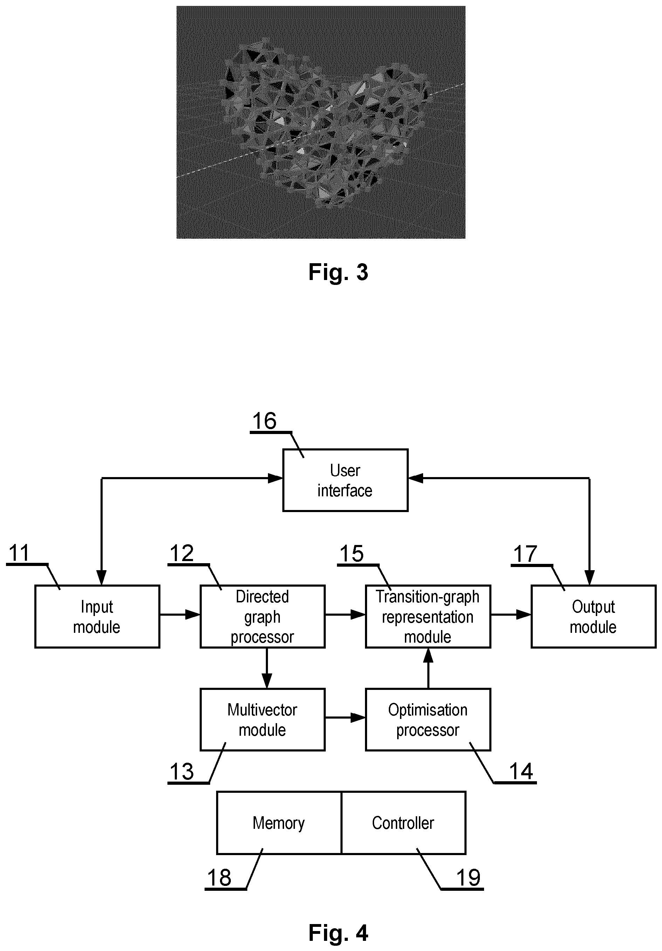

The method can be implemented on a computer system of the type schematically shown in Fig. 4. The system comprises:

- an input module 11 that receives sampled vector field (SVF) data from various sources, such as numerical simulations or physical measurements;

- a directed graph processor 12 that converts the input data into the directed graph G($\mathcal{K}$), representing a finite topological space;

- a multivector module 13 that generates the candidate set C by utilizing the graph G(X) produced by processor 12 along with the compatibility function

$$\mathcal{F}(\sigma \rightsquigarrow \tau);$$

- an optimisation processor 14 applying integer programming techniques to determine the optimal decomposition of $\mathcal{K}$ into multivectors *M,* maximizing the compatibility function $\mathcal{F}(\mathcal{M})$;

- a transition graph representation module 15 that constructs the transition graph *G(M)* by adding intra-multivector edges to the directed graph G(X);

- a user interface 16 enabling interaction with the system for entering input data and inspecting results;

- an output module 17 presenting the resulting dynamic system model as the transition graph *G(M),* which approximates system trajectories;

- memory 18 storing input, intermediate, and output data used by various modules;

- a controller 19 coordinating the data flow and computational processes of all modules (connections are omitted from Fig. 4 for clarity).

The input module 11 may be implemented using standard I/O interfaces controlled by a general-purpose CPU, receiving data from external sources such as sensors, measurement devices, computer networks, or other computer systems. Alternatively, dedicated hardware such as Data Acquisition (DAQ) cards may be used.

The directed graph processor 12 may run on a CPU capable of processing large datasets and performing graph algorithms, or it can exploit a Graphics Processing Unit (GPU), particularly efficient for graph operations.

The multivector module 13 typically executes on a CPU, especially for handling complex combinatorial computations.

The optimisation processor 14 may utilize specialized CPU or GPU hardware adapted for solving optimization and integer programming problems. Additionally, for higher performance requirements, dedicated hardware such as Field-Programmable Gate Arrays (FPGAs) or Application-Specific Integrated Circuits (ASICs) may be employed. Distributed processing techniques may also be leveraged for optimization tasks.

The transition graph representation module 15 can similarly operate on CPU or GPU hardware, depending on performance and parallel processing requirements of the graph-based data.

The user interface 16 is typically realized through standard CPU hardware combined with graphical user interface software.

The output module 17 utilizes conventional CPU-driven hardware devices such as monitors, printers, or other data-presentation devices.

Memory 18 includes standard Random Access Memory (RAM) modules as well as mass storage for persistent data storage.

Controller 19 may be realized using a microcontroller or general-purpose CPU.

Optionally, many of these modules can be implemented in software running on a general-purpose CPU, employing specialized software for data processing, graph computations, and optimization. Depending on specific performance requirements, selected modules can also be realized through dedicated FPGA or ASIC implementations for enhanced efficiency.

**SIMULATION EXAMPLE**

The effectiveness of the invention was validated using implementations based on sampled vector field (SVF) data from simulations of canonical dynamical systems in two and three dimensions, including the Van der Pol oscillator, the Lotka-Volterra system, and the Lorenz system.

Fig. 2 illustrates the SVF obtained from simulations of the Van der Pol oscillator, highlighting the attractor and periodic orbit; Fig. 3 depicts the Lorenz attractor.

In these examples, the space $\mathcal{K}$ used was a simplicial triangulation of $\mathbb{R}^2$ or $\mathbb{R}^3$. The vertices of the directed graph G($\mathcal{K}$) correspond to simplicial cells (points, edges, triangles, and tetrahedra in three dimensions). Numerical simulations of the dynamical systems were conducted at the triangle vertices, resulting in the sampled vector fields that were processed by the proposed method.

**APPLICATIONS**

The invention can primarily be implemented as a part of measurement apparatuses, in which sampled vector fields arise naturally. It is particularly beneficial in diagnostics and research related to fluid or gas mechanics and magnetic field studies. Consequently, the invention finds practical application in industries such as automotive and aviation (aerodynamic data processing) and in materials science (stress analysis).

Another critical application is anomaly detection in mechanical and electronic equipment. The proposed technology facilitates comparisons between observations from properly functioning processes and current operational data, enabling analysis of deviations.

Specifically, the technology is well-suited to non-invasive instruments for flow measurement, such as Particle Image Velocimetry (PIV) and Laser Doppler Anemometry (LDA). Furthermore, it supports applications in computational topological dynamics, including detecting and tracking flow anomalies through persistent homology of Morse decompositions. Additionally, it provides structured vector data suitable for machine learning tasks, such as classification.

In all these contexts, the invention functions not merely as a mathematical tool but as a technical process that transforms physical measurement signals into graph-based dynamic system models. These models support subsequent tasks, including control system design, anomaly detection, and automated reasoning about physical systems. Thus, the invention serves as a foundational component in applied computational topology and discrete modeling of measured phenomena.

**Claims**

1. A computer-implemented method for performing real-time measurements in a technical system, the method comprising:

   - receiving input data representing sampled vector fields (SVF) obtained from real-time sensor measurements of said technical system, wherein said sampled vector fields comprise vectors associated with discrete measurement points within a physical space of said technical system;

- transforming the input data into a directed graph G($\mathcal{K}$), wherein $\mathcal{K}$ is a finite topological space comprising discrete cells arranged according to a partial ordering that reflects adjacency and inclusion relationships among said cells, and wherein each cell corresponds to at least one of said measurement points;

- generating candidate multivectors (C) from said directed graph G($\mathcal{K}$) by evaluating a compatibility function

$$\mathcal{F}(\sigma \rightsquigarrow \tau),$$

wherein

$$\sigma \rightsquigarrow \tau$$

denotes a directed path between two cells $\sigma$ and $\tau$ in the directed graph G($\mathcal{K}$) and wherein said compatibility function quantifies directional compatibility between cells based on the vectors from the sampled vector fields (SVF);

- determining an optimal decomposition ($\mathcal{M}$) of the finite topological space ($\mathcal{K}$) into multivectors selected from said candidate multivectors (C), wherein the optimal decomposition maximizes the compatibility function $\mathcal{F}(\mathcal{M})$ to best approximate dynamic transitions indicated by the sampled vector fields (SVF);

- creating a transition graph G($\mathcal{M}$) by augmenting the directed graph G($\mathcal{K}$) with additional intra-multivector edges, wherein said transition graph represents the dynamic behavior of the technical system derived directly from the sampled vector fields; and

- outputting data representing the transition graph (G($\mathcal{M}$)) as a computer-readable representation of the real-time dynamic behavior of the technical system, wherein said transition graph explicitly models transitions between system states derived directly from the sampled vector fields (SVF).

2. The method according to claim 1, further comprising using said outputted data representing the transition graph *(G(M))* to determine adjustments to at least one operating parameter of the technical system based on the detected dynamic behavior, wherein said adjustments are configured to maintain, optimize, or correct system performance in real-time.

3. The method according to claim 1 or 2, further comprising analyzing said outputted data representing the transition graph *(G(M))* to detect an abnormal transition indicative of deviation from a predefined baseline dynamic behavior of the technical system; and generating, in response to the detected abnormal transition, a protective control signal configured to initiate at least one safeguard action to protect or stabilize operation of the technical system.

4. The method according to any of previous claims, wherein determining the optimal decomposition *(M)* into multivectors is performed by solving an integer-programming optimization problem having an objective function defined by said compatibility function ($\mathcal{F}(\mathcal{M})$) and linear constraints enforcing convexity and decomposition conditions.

5. The method according to claim 4, wherein the compatibility function ($\mathcal{F}(\mathcal{M})$) is approximated by evaluating compatibility between candidate multivectors (C) and their representative cells.

6. The method according to any of previous claims, wherein said sensor measurements are measurements of fluid flow sensors.

7. The method according to any of previous claims, wherein said sensor measurements are measurements of magnetic field.

8. The method according to any of previous claims, wherein said technical system is a physical system modeled as a dynamical system.

9. The method according to any of previous claims, wherein said technical system is a physical system described by partial differential equations.

10. The method according to any of previous claims, wherein the steps of receiving input data, generating candidate multivectors, determining the optimal decomposition, and creating the transition graph are executed repeatedly and incrementally as new real-time sensor measurements become available, thereby enabling continuous real-time updating of the transition graph *(G(M))*.

11. The method according to claim 10, wherein said incremental updating is performed without recomputing the entire directed graph (G($\mathcal{K}$)), but only selectively updates portions affected by newly received sensor measurements.

12. The method according to claim 10 or 11, wherein incremental updating of the transition graph *(G(M))* maintains consistent topological integrity at all times, thereby providing reliable real-time monitoring and analysis in the presence of irregular, incomplete, or noisy input data.

13. The method according to any of previous claims, wherein the integer-programming optimization used in determining the optimal decomposition ( $\mathcal{M}$ ) employs bounded-latency computational techniques, thereby ensuring predictable computational performance suitable for real-time industrial control applications.

14. The method according to claim 13, wherein said bounded-latency computational techniques comprise at least one of: specialized branch-and-bound heuristics executed on graphical processing units (GPUs); systolic array implementations on field-programmable gate arrays (FPGAs); application-specific integrated circuits (ASICs); or other hardware acceleration methods providing guaranteed worst-case execution times (WCET).

15. A computer system for performing real-time measurements in a technical system, the computer system comprising:

   - an input module (11) configured to receive input data representing sampled vector fields (SVF) obtained from real-time sensor measurements of said technical system, wherein said sampled vector fields comprise vectors associated with discrete measurement points within a physical space of said technical system;

   - a directed graph processor (12) configured to transform the input data into the directed graph G($\mathcal{K}$), wherein $\mathcal{K}$ is a finite topological space comprising discrete cells arranged according to a partial ordering that reflects adjacency and inclusion relationships among said cells, and wherein each cell corresponds to at least one of said measurement points;

   - a multivector module (13) configured to generate candidate multivectors (C) from said directed graph G($\mathcal{K}$) by evaluating a compatibility function

$$\mathcal{F}(\sigma \rightsquigarrow \tau),$$

   wherein

$$\sigma \rightsquigarrow \tau$$

   denotes a directed path between two cells $\sigma$ and $\tau$ in the directed graph G($\mathcal{K}$), and wherein said compatibility function quantifies directional compatibility between cells based on the vectors from the sampled vector fields (SVF);

   - an optimisation processor (14) configured to determine an optimal decomposition *(M)* of the finite topological space ( $\mathcal{K}$ ) into multivectors selected from said candidate multivectors (C), wherein the optimal decomposition maximizes the compatibility function $\mathcal{F}(\mathcal{M})$ to best approximate dynamic transitions indicated by the sampled vector fields (SVF);

   - a transition-graph representation module (15) configured to create a transition graph G($\mathcal{M}$) by augmenting the directed graph G($\mathcal{K}$) with additional intra-multivector edges, wherein said transition graph represents the dynamic behavior of the technical system derived directly from the sampled vector fields (SVF);

   - an output module (17) configured to output data representing the transition graph (G($\mathcal{M}$)) as a computer-readable representation of the real-time dynamic behavior of the technical system, wherein said transition graph explicitly models transitions between system states derived directly from the sampled vector fields (SVF);
- a user interface (16) configured for user interaction, including input and inspection of data and results;
- memory (18) configured to store input, intermediate, and output data; and
- a controller (19) configured to coordinate the data flow and computational processes of the input module (11), directed graph processor (12), multivector module (13), optimisation processor (14), transition-graph representation module (15), output module (17), user interface (16), and memory (18).

**Fig. 1**

**Fig. 2**

**Fig. 3**

**Fig. 4**

| | Europäisches Patentamt European Patent Office Office européen des brevets | **EUROPEAN SEARCH REPORT** | | **Application Number** EP 25 17 6451 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MATEUSZ JUDA: "Unsupervised Features Learning for Sampled Vector Fields", ARXIV.ORG, CORNELL UNIVERSITY LIBRARY, 201 OLIN LIBRARY CORNELL UNIVERSITY ITHACA, NY 14853, 11 August 2020 (2020-08-11), XP081736573, * abstract * * section 5 paragraph 1 * * page 1, paragraph 2 * * section 1.2 paragraph 1 * * figure 1 * * page 3, last paragraph - page 4, paragraph 1 * * page 3, paragraph 4 * * the whole document * ----- | 1-15 | INV. G06F30/20 G06F17/13 G06F30/28 ADD. G06F111/10 |
| Y | AMORIM TIAGO DE ALBUQUERQUE ET AL: "The realisation of admissible graphs for coupled vector fields", NONLINEARITY, INSTITUTE OF PHYSICS PUBLISHING, BRISTOL, GB, vol. 37, no. 1, 5 December 2023 (2023-12-05), XP020485527, ISSN: 0951-7715, DOI: 10.1088/1361-6544/AD0CA4 [retrieved on 2023-12-05] * abstract * * page 2, last paragraph * * page 3, paragraph 2 * * page 10, paragraph 1 * * the whole document * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 22 October 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

**Application Number**

EP 25 17 6451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WOUKENG DONALD ET AL: "Rigorous computation in dynamics based on topological methods for multivector fields", JOURNAL OF APPLIED AND COMPUTATIONAL TOPOLOGY, vol. 8, no. 4, 4 November 2023 (2023-11-04), pages 875-908, XP093327706, ISSN: 2367-1726, DOI: 10.1007/s41468-023-00149-2 * abstract * * page 878, paragraph 3 * * section 2.6 paragraphs 1-2 * * section 3.1 paragraphs 1-2 * * the whole document * | 1-15 | |

TECHNICAL FIELDS SEARCHED (IPC)

The present search report has been drawn up for all claims

| Place of search | Date of completion of the search | Examiner |
|---|---|---|
| Munich | 22 October 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)